# EUROPEAN PATENT APPLICATION

(11) **EP 4 236 051 A1**
(43) Date of publication of application: **30.08.2023**
(21) Application number: 22158643.1
(22) Date of filing: 24.02.2022
(51) Int. Cl.: H02M 3/335, H02M 1/00

(54) **CONVERTER BUILDING BLOCK, MODULAR ISOLATED ACTIVE BRIDGE, IN PARTICULAR MULTI-ACTIVE-BRIDGE, DC/DC CONVERTER CIRCUIT AND DC/DC CONVERTER ARRANGEMENT**

(71) Applicant: Rolls-Royce Solutions GmbH, 88045 Friedrichshafen (DE); Rolls-Royce plc, London SW1E 6AT (GB)
(72) Inventor: Sasongko, Firman, Batam (ID); Kotturu, Janardhana, 643986 Singapore (SG); Peng, Yaxin, 643656 Singapore (SG); Simanjorang, Rejeki, 29464 Batam (ID); Vaiyapuri, Viswanathan, 520291 Singapore (SG); Dasgupta, Souvik, 642685 Singapore (SG); Gupta, Amit, 650386 Singapore (SG); Neubauer, Steffen, 88662 Überlingen (DE)
(74) Representative: Eisenführ Speiser

(57) **Abstract**

The invention regards a converter building block (100), wherein the converter building block is adapted for use in a modular isolated active bridge DC/DC converter circuit, in particular a multi-active-bridge DC/DC converter circuit. According to the invention the converter building block (100) comprises bidirectional DC/AC converter circuit comprising a number of switching elements (102.1-102.4). Moreover, the converter building block comprises a controller unit (106), wherein the controller unit (106) is configured to generate an internal switching-element control signal (110) for controlling an operation of the switching elements (102.1-102.4). Additionally, the converter building block comprises a switching-element control interface (108) configured to send an outgoing switching-element control signal (112.1) for controlling switching elements of one or more other converter building blocks and to receive an incoming switching-element control signal (112.2) adapted for controlling the switching elements (102.1-102.4) of the converter circuit (102). Furthermore, the controller unit (106) is selectively operable in a master operation mode (M) and in a slave operation mode (S).

## Description

The present invention relates to a converter building block of the preamble part of claim 1, i.e. for use in a modular isolated active bridge DC/DC converter circuit, in particular multi-active-bridge DC/DC converter circuit, and the present invention also relates to the modular isolated active bridge DC/DC converter circuit, in particular multi-active-bridge DC/DC converter circuit, comprising two or more converter building blocks. Further, the present invention relates to a DC/DC converter arrangement comprising the modular isolated active bridge DC/DC converter circuit, in particular multi-active-bridge DC/DC converter circuit, preferably for connecting to a DC source and/or a DC bus, in particular an energy storage unit like e.g. a battery and/or a load.

A DC/DC converter, also often referred to as DC-to-DC converter, is an electronic circuit that converts a source of direct current (DC current) from a first voltage level to another, second voltage level. It is a specific kind of converter of the general converter-type known as an "electric power converter". Power levels range from very low (small batteries) to very high (high-voltage power transmission).

DC/DC converters (DC-to-DC converters) are used in one kind of application for portable electronic devices such as cellular phones and laptop computers, which are supplied with power from batteries primarily. Transformers used for voltage conversion at main frequencies of 50-60 Hz, however, must be large and heavy for powers exceeding a few watts. This makes them expensive, and they are subject to energy losses in their windings and due to eddy currents in their cores.

DC-to-DC techniques as mentioned above in another kind of application that use transformers or inductors work at much higher frequencies, requiring only much smaller, lighter, and cheaper wound components. Consequently, these techniques are used even where a main transformer could be used; for example, for domestic electronic appliances it is preferable to rectify main voltage to DC, use switch-mode techniques to convert it to high-frequency AC at the desired voltage, then, usually, rectify to DC. The entire complex circuit is cheaper and more efficient than a simple mains transformer circuit of the same output. DC/DC converters are widely used for DC microgrid applications, in the context of different voltage levels. Practical electronic converters use switching techniques.

Switched-mode DC/DC converters convert a first DC voltage level to another, second DC voltage level; which other second DC voltage level may be higher or lower than the first DC voltage level. The conversion by the switched-mode DC/DC converter is established by storing the input energy temporarily and then releasing that energy to the output at a different voltage. The storage may be in either magnetic field storage components (inductors, transformers) or electric field storage components (capacitors). Thus, this conversion method can increase or decrease voltage.

Generally, a dual-active-bridge (DAB) is a bidirectional for a DC/DC converter with more or less identical primary and secondary side full-bridges and a high frequency transformer and an energy transfer inductor and DC-link capacitors. Energy transfer inductance in a model refers to the leakage inductance of the transformer plus any necessary external energy transfer inductance. Two legs of both full-bridges e.g. can be driven with complimentary square-wave pulses. Power flow in the dual-active- bridge can be directed by phase-shifting the pulses of one bridge with respect to the other using phase shift modulation. Such control directs power between the two DC buses such that the leading bridge delivers power to the lagging bridge. Most DC/DC converter circuits also regulate the output voltage.

As an example, bidirectional DC/DC converters, such as dual-active-bridge converters (DAB converters), are frequently used in high-power applications such as electric or hybrid-electric vehicles, which is the main technical field of interest in the instant case - an example is a power converter in a rail way application, namely a so-called rail converter. Generally, such kind of DC/DC converters require DC-link capacitors at both input and output terminals of the DC/DC converter. Contactors are usually used to connect or disconnect the DC-link capacitors with a DC power supply or a DC bus.

In applications such as hybrid train power packs, electric and hybrid electric vehicles, and any other application where a battery interfacing system is required, bidirectional DC/DC converters are often used as a bridge between a high-voltage DC bus connected to an energy storage unit and a low-voltage DC bus connected to a battery or a load. The mentioned energy storage unit can be any kind of DC power supply; for example in the case of an electric vehicle the DC-bus is that of an electric vehicle, but in general the feature of a DC-bus is not limited to an electric vehicle bus. The DC-bus also can be adapted for a voltage source in general to be connected to the DC bus. E.g. the DC bus can be that of a microgrid application, such as in power system utilizing distributed energy resources. Still also the voltage source are not limited to a battery or a load but can be others.

Electrical vehicles in general such as hybrid electric vehicles and plug-in hybrid electric vehicles use the two-stage power converting mechanism such as DC/DC and DC/AC converter fed electric machines to drive the electric vehicles with motoring and generating model. The DC/DC converters use DC link capacitors on both input and output terminals to connect the DC/DC converter in between DC appliances like e.g. the aforementioned battery power source on the input (secondary) side and the main DC-bus on the output (primary) side; this is by means of a pair of mechanical contactors on positive and negative power lines. The DC-link capacitors are generally pre-charged with the additional circuitry, which consists of a semiconductor switch and a resistor in series between main DC-bus and DC-link capacitor.

Current DC/DC converters are designed following the idea of a modular configuration comprising a plurality of converter modules operating in parallel to each other. To coordinate and synchronize an operation of the converter modules, different controller configurations are utilized.

The converter building block of the introduction is adapted for use in a modular isolated active bridge, in particular multi-active-bridge, DC/DC converter circuit and the converter building block comprises a bidirectional DC/AC converter circuit comprising a number of switching elements, an inductance-side terminal electrically connectable to a transformer, in particular a frequency transformer and a DC-bus-side terminal electrically connectable to a DC bus.

F. Petruzziello et al. (F. Petruzziello, P. D. Ziogas, and G. Joos, "A novel approach to paralleling of power converter units with true redundancy," in Proc. IEEE PESC '90, 1990, pp. 808-813) describe a scheme which offers a given unit frequency and phase synchronization with a plurality of units operating in parallel. The scheme is based on a master/slave configuration using a rotating priority window which provides random selection of a new master.

H. Fan et al. (H. Fan and H. Li, "A distributed control of input-series-output-parallel bidirectional DC/DC converter modules applied for 20 kVA solid state transformer," 2011 Twenty-Sixth Annual IEEE Applied Power Electronics Conference and Exposition (APEC), Fort Worth, TX, 2011, pp. 939-945) describe a design of a high-frequency transformer comprising isolated bidirectional DC/DC converter modules connected in input-series-output-parallel (ISOP). A phase-shift dual-half-bridge (DHB) converter is employed to achieve high-frequency galvanic isolation, bidirectional power flow, and zero voltage switching (ZVS) of all switching devices. Moreover, the modular structure is used in combination with a distributed control.

S. K. Mazumder et al. (S. K. Mazumder, M. Tahir and S. L. Kamisetty, "Wireless PWM control of a parallel DC/DC buck converter," in IEEE Transactions on Power Electronics, vol. 20, no. 6, pp. 1280-1286, Nov. 2005) describe a concept for wireless pulse-width modulation (PWM) control of a parallel DC/DC buck converter. It eliminates the need for multiple physical connections of gating/PWM signals among the distributed converter modules. The new scheme relies on radio-frequency (RF) based communication of the PWM control signals from a master to the slave modules.

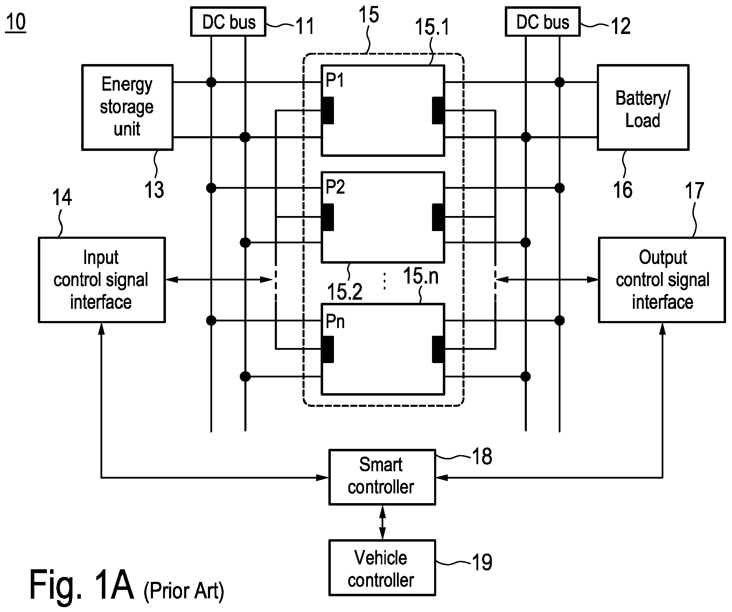

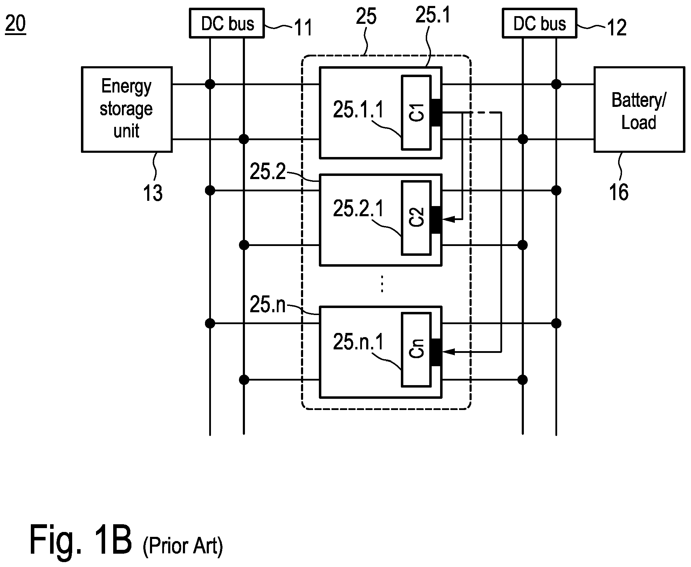

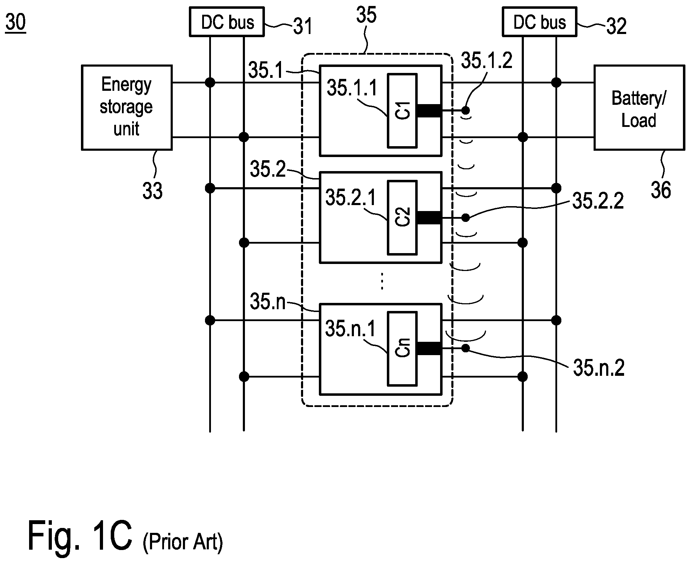

FIG. 1A, FIG. 1B and FIG. 1C illustrate such converter configurations of the kind known in the prior art as will be described therewith. It can be seen therefrom that the control thereof can be improved.

Thus, it is an objective of the present invention to provide an improved modular DC/DC converter circuit; preferably with improved control.

This objective is achieved through the converter building block according to claim 1.

To achieve the object the invention also leads to a modular isolated active bridge, in particular multi-active-bridge, DC/DC converter circuit according to claim 13 and a DC/DC converter arrangement according to claim 14.

In the following, the converter building block according to claim 1 will be described in more detail.

The invention starts from the converter building block as defined in the preamble part of claim 1. Thus, the converter building block is adapted for use in a modular isolated active bridge, in particular multi-active-bridge, DC/DC converter circuit. Moreover, the converter building block comprises a converter circuit comprising a number of switching elements.

According to the invention a controller unit is provided in the converter building block, wherein the controller unit is configured to generate an internal switching-element control signal for controlling an operation of the switching elements.

In addition, the converter building block comprises a switching-element control interface. The switching-element control interface is configured to send an outgoing switching-element control signal for controlling switching elements of one or more other converter building blocks and to receive an incoming switching-element control signal adapted for controlling the switching elements of the converter circuit.

Further according to the invention, the controller unit is selectively operable in a master operation mode and in a slave operation mode, wherein the controller unit is configured
- when operated in the master operation mode, to generate the internal switching-element control signal and to generate the outgoing switching-element control signal in accordance with the internal switching-element control signal, and
- when operated in the slave operation mode, to generate the internal switching-element control signal in accordance with the incoming switching-element control signal.

It can be understood, that moreover, the converter circuit is a bidirectional DC/AC converter circuit and comprises an inductance-side terminal that is configured to electrically connect the converter circuit to a transformer, in particular frequency transformer, and a DC-bus-side terminal that is configured to electrically connect the converter circuit to a DC bus.

In this application generally, except as indicated otherwise, the meaning of "connected" means "electrically connected" and the meaning of "connected in parallel" and the like means to define the specific kind of electrically switching an electrical element in relation to another electrical element to configure a respective kind of electrical circuit; thus, in the given example, to configure an electrical circuit with electrical elements switched in a parallel electrical connection relative to each other. The meaning of electrical connection thus is not restricted to a certain kind of electrical contact but embraces all kinds of contact- or non-contact-couplings to transmit an electrical signal or to hold a certain electrical state to establish a circuit operation of the electrical circuit with the specified electrically switched elements.

The invention is based on the recognition that a construction of DC/DC converters using modular building blocks is advantageous. The reason is because it offers an efficient way to construct a variety of DC/DC converters from a limited number of converter building blocks, wherein each DC/DC converter can be adapted to specific requirements of an environment in which the DC/DC converter will be used.

In particular with regard to high-power and high-voltage applications, it is often easier to stack together smaller converters to build a DC/DC converter with the required power and voltage rating. This is due to the fact that switching elements, also referred to as switching power devices, have voltage and/or current limitations that may not be sufficient for applications requiring high working voltage and/or power. Therefore, series and parallel connections of modular converter building blocks, or combinations thereof, can be devised to obtain a high-power and high-voltage DC/DC converter.

However, an advantage of the converter building block according to the invention in comparison to the prior art is that a converter building block realizes a more refined modularization in comparison to the modules known in the prior art.

In the prior art, a modularization of a DC/DC converter is achieved by constructing the DC/DC converter from stand-alone DC/DC converter circuits that are operated in parallel to each other.

The converter building block according to the invention, in contrast, is not a stand-alone DC/DC converter. The converter building block is based on the design of active-bridge converters in general, hereinafter referred to as (isolated) active bridge, in particular multi-active-bridge, converters.

In the active bridge converter, in particular multi-active-bridge converter, the converter building block comprises only one bidirectional active-bridge DC/AC converter circuit of which at least two are required to form a stand-alone DC/DC converter. As a result, a failure of a single converter building block does affect the performance of a DC/DC converter to a lesser extent. Furthermore, due to the more refined modularization provided by the converter building block, a larger variety of DC/DC converter circuits can be constructed.

In this application generally an active bridge is used as term for a common active bridge; still the term active bridge can also mean a multi-active bridge. Thus, an active bridge converter as mentioned hereinafter should embrace in general any kind of a bridge converter like a dual-active bridge DC/DC converter (DAB converter) and also a multi-active bridge DC/DC converter or the like in general. A dual-active bridge or multi-active bridge is inherently isolated; thus the term "isolated", although used in most instances hereinafter, is optional since dual-active bridge or multi-active bridge can be considered as inherently isolated.

Further, although isolated multi-active bridge DC/DC converters may not be common, in this case, the term multi-active bridge DC/DC converter is used to describe a topology of DC/DC converters that comprises equal to or more than two active bridges. Hence, according to the term "multi-active bridge" it embraces also a dual-active bridge and is meant to embrace any active bridge converter like e.g. a commonly named dual-active bridge converter and multi-active bridge converter as mentioned above.

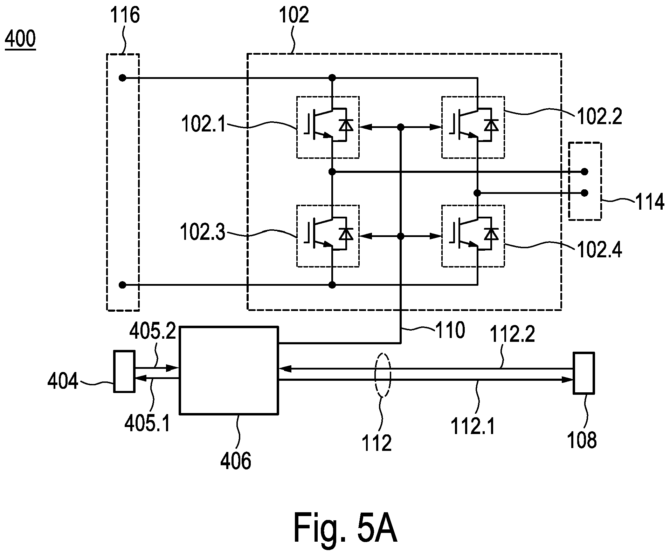

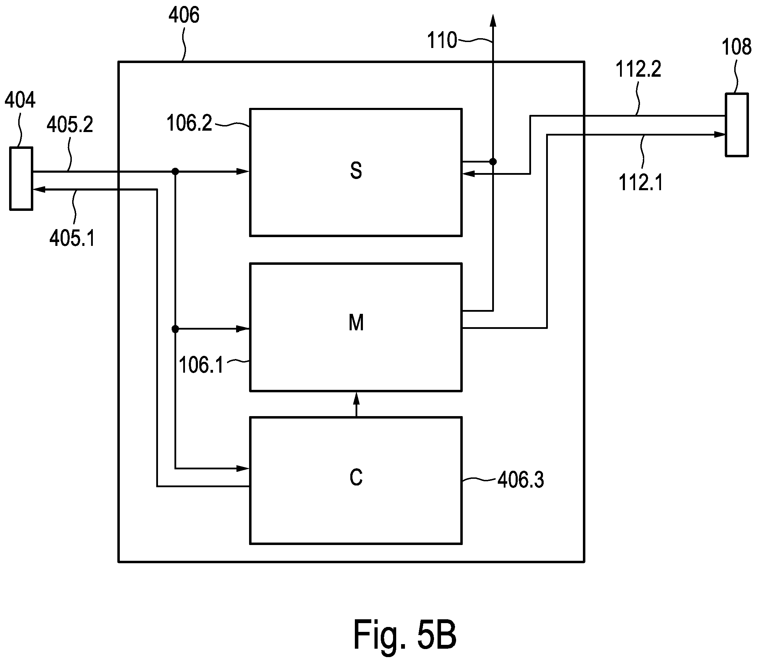

Still also, the instant invention may also be used in a single active bridge converter; thus, the term "active bridge converter" embraces all kinds of single- , dual-, quadrupole- or other multi-active bridge converters (SAB, DAB, QAB, MAB). A variety thereof is shown and described for example in Fig. 5 of the Article "Comparative Analysis of Multiple Active Bridge Converters Configurations in Modular Smart Transformer" in IEEE Transactions on Industrial Electronics, vol. 66, no. 1, pp. 191-202, Jan. 2019 of L.F. Costa et al.. In particular in systems in which installation space and costs only play a subordinate role (e.g. container storage), it can make sense to use two separate converters that are optimized for the respective operating range. However, preferred is a dual-active bridge (DAB) converter with building blocks, in particular in a symmetric configuration. A dual active bridge is a bidirectional DC-DC converter with identical primary and secondary side full-bridges and a high frequency transformer; optionally also an energy transfer inductor and/or DC-link capacitors. In a preferred development, the converter circuit has a H-bridge circuit, also often referred to as a full-bridge circuit. These circuits have shown to be very efficient in the conversion of electrical power. In variants of this development, each H-bridge comprises up to four switching elements.

The invention is based on the further recognition that, even though some of the DC/DC converters of the prior art are constructed using a modular configuration, the risk of a converter failure remains high. In particular, the inventors recognized that the root cause of the high risk for a converter failure lies in the usage of a single master controller unit in a centralized control architecture, which controls the operation of each converter module. If this single unit fails, the entire DC/DC converter fails, even though the majority of converter modules might still be intact.

This disadvantage exists irrespective of whether the single master controller unit is comprised within a separate controller unit, which is external to the converter modules, or whether the single master controller unit is part of one of the converter modules. This short-coming is addressed by the converter building block according to the invention. According to the invention a controller unit is provided in the converter building block, wherein the controller unit is configured to generate an internal switching-element control signal for controlling an operation of the switching elements.

Further, according to the invention each converter building block can be selectively operated in a master operation mode and in a slave operation mode. In the master operation mode, the controller unit of the respective converter building block is configured to generate an internal switching-element control signal for controlling the operation of the switching elements present within the respective converter building block and an outgoing switching-element control signal to control the operation of the switching elements residing in one or more other converter building blocks. In the slave operation mode, on the other hand, the controller unit of the respective converter building block uses an incoming switching-element control signal to generate the internal switching-element control signal. In case, a converter building block operating in the master operation mode fails, it is possible to reconfigure the remaining converter building blocks to selectively operate another of the remaining converter building blocks in the master operation mode.

Also in view of computational requirements, the proposed converter building block is advantageous. In the centralized control architecture of the prior art, a single master control unit is required to obtain all the necessary feedback signals, perform the control algorithms, and generate switching pulses to all the power devices. Particularly for converter circuits comprising a large number of converter modules, the computational burden becomes too heavy for the master control unit. Moreover. the number of analog and digital signal input/output in the controller may not be enough to process all the necessary feedback signals and generate all the switching pulses. The converter building block according to the invention makes it possible to build a modular DC/DC converter circuit comprising a plurality of master control units that work in parallel to each other. In addition, the converter building block according to the invention enable a dynamical adaption of the number of converter building blocks acting as master control units within a DC/DC converter circuit in accordance with an operating condition.

Furthermore, the described converter building blocks simplify construction of modular DC/DC converters, since the modular DC/DC converters are assembled only from a single active component - the converter building block.

Advantageous developments of the invention are found in the dependent claims and indicate in detail advantageous possibilities to realize the concept described above within the scope of the task as well as with regard to further advantages. In the following, preferred developments of the converter building block will be described.

In a preferred development, the converter circuit establishes an H-bridge circuit, also often referred to as a full-bridge circuit. These circuits have shown to be very efficient in the conversion of electrical power. In variants of this development, each H-bridge comprises up to four switching elements.

In a preferred development, at least the internal switching-element control signal is generated using pulse-width modulation (PWM). In variants of this development, also the outgoing and the incoming switching-element control signal are generated using PWM.

In another preferred development, the converter building block comprises a controller configuration interface configured to receive controller-configuration information. Moreover, the controller unit is configured, when operated in the master operation mode, to generate the internal switching-element control signal using the controller-configuration information and to generate the outgoing switching-element control signal in accordance with the internal switching-element control signal and the controller-configuration information. The controller-configuration interface of the converter building block is configured to allow a communication between the converter building block and, for example, a central control unit. Through the controller-configuration interface, the converter building block receives the controller-configuration information from the central control unit. The controller-configuration information may comprise a plurality of information required to configure the controller unit of the converter building block. The possibility to configure or reconfigure the operation of the controller unit of the converter building block using the controller-configuration information is advantageous, because it allows the operation of the converter building block to be changed without having to change any software or hardware of the converter building block.

In a variant of this development, the controller-configuration information is indicative of whether the converter building block is operated in the master operation mode or in the slave operation mode. In another variant, the controller-configuration information is indicative of how to generate the internal switching-element control signal and the outgoing switching-element control signal. In different variants, this is achieved by the controller-configuration information comprising information about a reference value of a voltage, a current or an electrical power to be generated. In another variant, the controller-configuration information also comprises a synchronization signal for synchronizing operation of a plurality of converter building blocks. In yet other variants, the controller-configuration information comprises information regarding reference values for current, voltage or power or mode setting regarding voltage/current regulator and droop control mode.

In a preferred development, the converter building block additionally comprises a sensor-interfacing circuit that is configured to receive sensor information data, and a feedback exchange interface that is configured to send and receive feedback-exchange signals.

Moreover, the controller unit is configured
- in the master operation mode, to receive an incoming feedback-exchange signal from one or more other converter building blocks and to use the feedback-exchange signal for generating the internal switching-element control signal and the outgoing switching-element control signal, and
- in the slave operation mode, to provide at the feedback exchange interface an outgoing feedback-exchange signal indicative of the sensor information data.

The described development allows the converter building block operating in the master operation mode to use the sensor information data received by the converter building block itself and the sensor information data received by the plurality of other converter building blocks in generating the internal switching-element control signal and the outgoing switching-element control signal. This allows the usage of control strategies including feedback loops for generating the control signals. It also allows to detect a malfunction of the converter building block or any of the plurality of the other converter building blocks.

In variants of this development, the sensor information data originates from a voltage sensor, a current sensor, and a temperature sensor or any combination of one or more of the three sensor types. In some of those variants, the one or more sensors are comprised within the converter building block itself. In other variants, the one or more sensors are located externally to the converter building bridge and the sensor-interfacing circuit comprises a sensor-information input interface that is configured to receive the sensor information data from one or more external sensors. In yet another of these variants, the converter building block comprises at least one sensor and also the sensor-information input interface.

Furthermore, in some variants of this developments, the feedback-exchange signal is an analog signal. In yet other variants, the feedback-exchange signal is provided to the one or more other converter building blocks via a CAN bus.

In another preferred development, the converter building block comprises a synchronization interface that is configured to receive an incoming synchronization signal indicative of one or more timing requirements. Moreover, the controller unit is configured, in the master operation mode, to generate the internal switching-element control signal and the outgoing switching-element control signal in accordance with the timing requirements. Equipping the converter building block with the ability to receive an incoming synchronization signal and to generate the internal switching-element control signal and the outgoing switching-element control signal using the incoming synchronization signal allows a parallel operation of sets of converter building block comprising one converter building block operated in the master operation mode and at least one converter building block operated in the slave operation mode. As a result, it is possible to assemble converters comprising a large number of converter building blocks, even when an upper limit exists for the number of converter building blocks that a converter building block operated in master operation mode is capable of controlling.

In yet another preferred development, the controller unit of the converter building block is configured, in the slave operation mode, to generate the internal switching-element control signal by either using the incoming switching-element control signal as the internal switching-element control signal or by using the incoming switching-element control signal time-shifted by a shifting time amount as the internal switching-element control signal. By time-shifting the internal switching-element control signal, the converter building block operating in the slave operation mode can correct for transport time delays of the incoming switching-element control signal.

In a variant of this development, the shifting time amount is comprised within the controller-configuration information. In another variant, a pre-determined signal delay caused by the connections are added to the PWM signal generated by the slave controllers to compensate the transport delay.

In a further preferred development, the converter building block comprises a health-status interface that is configured to externally provide an outgoing health-status-information signal indicative of a health status of the converter building block. Moreover, the controller unit of the converter building block is configured, in the master operation mode, in the slave operation mode or in the master and the slave operation mode, to determine the health status and to generate and provide the outgoing health-status-information signal in accordance with the health status. By communicating the health status to, for example, a central control unit, the central control unit can adjust the usage of each converter building block according to its health status. In a variant of this development, the health status is indicative of any failure or partial failure of the converter building block.

For determining a health status sensors can be used or combination of sensors and health-monitoring algorithm to determine the health status of the converter building block. For example, by using the combination of extracted key signatures from collected sensor data and a health-monitoring algorithm, the health status of the power modules within the converter building block can be determined.

In the following, preferred developments of the converter building block that are configured to also operate in a central-control-unit operation mode will be described. All of those embodiments are based on the development of the converter building block comprising a controller-configuration interface as described above.

In one of those preferred developments, the controller-configuration interface of the converter building block is a bidirectional communication interface that is configured to externally provide controller-configuration information. Furthermore, the controller unit has a central-control-unit operation mode and is configured, in the central-control-unit operation mode, to generate the controller-configuration information and to provide the controller-configuration information through the controller-configuration interface to one or more other converter building blocks. In this development, the controller unit of the converter building block is configured to operate in the central-control-unit operation mode in parallel to the master operation mode or the slave operation mode. By including a central-control-unit operation mode, no external central control unit is required to operate a DC/DC converter comprising the described converter building blocks. Moreover, the risk of a converter failure is further reduced, since any of the converter building blocks can take over the role of the central control unit in case of a failure of converter building block that previously held the role of the central control unit.

In the following, different variants of this development will be described. All of those variants comprise the required features related to the central-control-unit operation mode as described above.

In one variant, the controller unit is configured to run a central-control-unit arbitration algorithm through which it determines, together with other converter building blocks in its surrounding, which converter building block is to be operated in the central-control-unit operation mode. In another variant, the converter building block is configured to assume the central-control-unit operation mode according to a pre-defined order. Both variants allow for construction of a converter that is truly modular and self-contained. In another variant of this development, the controller-configuration interface is configured to receive central-control-unit configuration information indicative of a configuration for the controller unit for operating in the central-control-unit operation mode. This is particularly advantageous to allow a reconfiguration of the operation of the controller unit in the central-control-unit operation mode.

In yet another variant, the converter building block additionally comprises all the features required for receiving the incoming synchronization signal as described in one of the developments above. Furthermore, in this variant, the synchronization interface is a bidirectional synchronization interface that is configured to externally provide an outgoing synchronization signal indicative of one or more timing requirements. Furthermore, the controller unit is configured, in the central-control-unit mode, to generate and provide through the synchronization interface the outgoing synchronization signal to one or more other converter building blocks. As described above, through providing an outgoing synchronization signal indicative of one or more timing requirements, multiple converter building blocks operating in the master operation mode can be operated in parallel in a single converter and orchestrated by one converter building block operating in central-control-unit operation mode.

In another variant, the converter building block comprises all the features required for providing the health-status-information signal as described with regard to one of the developments above. In addition, the health-status interface is configured to communicate the health-status-information signal, i.e. receive the incoming and/or outgoing health-status-information signal of at least one other converter building block. Moreover, the controller unit is configured, in the central-control-unit mode, to generate the controller-configuration information taking into account the health status of the at least one other converter building block. Using the health status of the at least one other converter building block for determining the controller-configuration information is advantageous to operate the at least one other converter building block according to their health status and any failure or partial failure of the at least one other converter building block.

In the following, different developments of the converter building block will be described that are configured to use different communication channels for receiving and providing the different signals.

In one of those development, the converter building block comprises a controller-configuration interface that is configured to send or to receive information via a controller area network bus. Using the controller area network bus for communication is advantageous, because it allows an exchange of information between a plurality of converter building blocks.

In another development, the switching-element control interface is configured to send or to receive information via optical signals. Optical signaling connections are particularly advantageous for transmitting time-critical signals.

In yet another development, the feedback-exchange interface is configured to send or to receive information via analog signals. Analog signals are particularly advantageous when transmitting information received from a sensor.

In the following, a modular isolated active bridge, in particular multi-active-bridge, DC/DC converter circuit according to a preferred development of the invention is described.

A dual-active bridge (DAB) as such is known as a common term in the technical field. Also an isolated multi-active bridge (MAB) DC/DC converter is generally known in the technical field and applies to a broad scope of various developments of active bridge DC/DC converters like also quadrupole active bridge (QAB) converters and the like. In this case a multi-active bridge DC/DC converter is used to describe a topology of DC/DC converters that comprises equal to or more than two active bridges and make it more general, hence the term "multi-active bridge" embraces also a dual-active bridge and is meant to embrace any active bridge converter like e.g. a commonly named dual-active bridge converter and multi-active bridge converter as mentioned above. The term isolated is optional since dual-active bridge or multi-active bridge is inherently isolated; nevertheless in some cases hereinafter the term "isolated" is used redundantly.

The modular isolated active bridge, in particular multi-active-bridge, DC/DC converter circuit comprises an inductive element including a transformer circuit, in particular frequency transformer circuit, with one or more primary-side transformer terminals and one or more secondary-side transformer terminals. Moreover, the modular bidirectional DC/DC converter circuit comprises two or more converter building blocks according to the idea of the invention. The inductance-side terminal of each of the converter building blocks is electrically connected to either one of the primary-side transformer terminals or one of the secondary-side transformer terminals, wherein at least one of the converter building blocks is connected to one of the primary-side transformer terminals and at least one of the converter building blocks is connected to the secondary-side transformer terminals. The DC/DC converter circuit is particularly advantageous, because due to the possibility to reconfigure every converter building block within the DC/DC converter circuit, the working of the DC/DC converter circuit can be optimized according to the circumstances in which the DC/DC converter circuit is operated.

In a preferred development of the DC/DC converter arrangement, the converter building blocks are electrically connected to the primary DC bus or the secondary DC bus in a parallel or in a serial configuration. The parallel and serial configurations are particularly advantageous configurations for electrically connecting the converter building blocks to the DC busses.

In another preferred development of the modular bidirectional DC/DC converter circuit, the DC/DC converter circuit comprises two converter building blocks. Moreover, the switching-element control interfaces of both converter building blocks are connected to each other through a signaling path. This setup is referred to as dual-active-bridge converter circuit, which is the most minimal version of the modular bidirectional DC/DC converter circuit in terms of the number of converter building blocks needed. In variants of this development, in which the converter building blocks comprise a feedback-exchange interface, the feedback-exchange interfaces are connected to each other through another signaling path.

In yet another preferred development of the modular bidirectional DC/DC converter circuit, the DC/DC converter circuit comprises a plurality of pairs of converter building blocks, wherein one of the converter building blocks included in each pair is connected to one of the primary-side transformer terminals and the other one of the converter building blocks included in each pair is connected to the secondary-side transformer terminals. Moreover, the switching-element control interfaces of both converter building blocks belonging to one pair are connected to each other through a signaling path. This DC/DC converter circuit allows the operation of dual-active-bridge converter circuits in parallel to each other.

In the following, the DC/DC converter arrangement according to the invention is described.

The DC/DC converter arrangement comprises a primary DC bus and a secondary DC bus. Furthermore, the DC/DC converter arrangement comprises a modular bidirectional DC/DC converter circuit according to the invention as described above. Moreover, the converter circuit of each of the converter building blocks comprised within the modular bidirectional DC/DC converter circuit has a DC-bus-side terminal, wherein the DC-bus-side terminals of those converter building blocks electrically connected to the primary-side transformer terminals are electrically connected to the primary DC bus and the DC-bus-side terminals of those converter building blocks electrically connected to the secondary-side transformer terminals are electrically connected to the secondary DC bus. The DC/DC converter arrangement shares all advantages of the converter building block itself. In particular, the DC/DC converter arrangement allows a transfer of power through the DC/DC converter circuit between the two busses. This is particularly advantageous in the case, where one of the DC busses is a low-voltage DC bus and the other DC bus is a high-voltage DC bus.

In a preferred development of the DC/DC converter arrangement, the converter building blocks of the DC/DC converter circuit comprised in the DC/DC converter arrangement are electrically connected to the primary DC bus or the secondary DC bus in a parallel or in a serial configuration. In variants of this development, the parallel or serial configuration is in input-parallel-output-serial configuration or an input-serial-output-parallel configuration.

In a further preferred development of the DC/DC converter arrangement, the DC/DC converter arrangement comprises an energy storage unit electrically connected to the primary DC bus and a load or a battery or any other kind of power load or power source electrically connected to the secondary DC bus. This is not specific to electric vehicle but can also be with regard to a voltage/power source or load connected to a DC bus in microgrid applications, such as in power system utilizing distributed energy resources.

These and other aspects of the invention will be apparent from and elucidated with reference to the embodiments described hereinafter with reference to the enclosed drawings. The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regard to additions to the lessons immediately recognizable from the drawings, reference is made to the relevant state of the art. It should be borne in mind that numerous modifications and changes can be made to the form and detail of an embodiment without deviating from the general idea of the invention. The features of the invention disclosed in the description, in the drawings and in the claims may be essential for the further development of the invention, either individually or in any combination. In addition, all combinations of at least two of the features disclosed in the description, drawings and/or claims fall within the scope of the invention. The general idea of the invention is not limited to the exact form or detail of the preferred embodiment shown and described below or to an object which would be limited in comparison to the object claimed in the claims. For specified design ranges, values within the specified limits are also disclosed as limit values and thus arbitrarily applicable and claimable. Further advantages, features and details of the invention result from the following description of the preferred embodiments as well as from the drawings. In the following, a summary of the figures is given.

In the following it is shown in:
- FIG. 1A: an electronic circuit of a hybrid-electric vehicle comprising a DC/DC converter, which includes a plurality of converter modules, known in the prior art;
- FIG. 1B: another electronic circuit comprising another DC/DC converter, which also includes a plurality of converter modules, known from the prior art;
- FIG. 1C: a variant of the electronic circuit of FIG. 1B, wherein control signals are exchanged between the converter modules using a wireless connection;
- FIG. 2A: an embodiment of a converter building block according to the invention, which is adapted for use in a modular bidirectional DC/DC converter circuit;
- FIG. 2B: the embodiment of a controller unit of the converter building block of FIG. 2A in more detail;
- FIG. 3: an embodiment of an isolated dual-active-bridge converter circuit comprising two converter building blocks as shown in FIG. 2A and FIG. 2B;
- FIG. 4: an alternative embodiment of a converter building block according to the invention, wherein the converter building block additionally comprises a sensor interface circuit, a feedback-exchange interface and a health-status interface for communication health-status information;
- FIG. 5A: yet another embodiment of a converter building block, which comprises a controller unit that is configured to operate in a central-control-unit mode;
- FIG. 5B: the embodiment of the controller unit of the converter building block of FIG. 5A in more detail;
- FIG. 6: another embodiment of a converter building block, which comprises a controller unit that is configured to operate in a central-control-unit operation mode;
- FIG. 7A: an embodiment of a DC/DC converter arrangement comprising a high-voltage DC bus, a low-voltage DC bus, and a DC/DC converter circuit including converter building blocks according to the invention;
- FIG. 7B: an embodiment of a communication network connecting the converter building blocks of the DC/DC converter circuit of FIG. 7A;
- FIG. 8A: an alternative embodiment of a DC/DC converter arrangement with a DC/DC converter circuit comprising converter building blocks according to the idea of the invention;
- FIG. 8B: an embodiment of a communication network connecting the converter building blocks of the DC/DC converter circuit of FIG. 8A;
- FIG. 9: another alternative embodiment of a DC/DC converter arrangement with a DC/DC converter circuit, wherein the DC/DC converter circuit has an asymmetric configuration of converter building blocks.

### In detail:

FIG. 1A to FIG. 1C show different electronic circuit comprising DC/DC converter circuit known in the prior art.

FIG. 1A shows an electronic circuit 10 known in the prior art of a hybrid-electric vehicle. The electronic circuit 10 comprises an energy storage unit 13 and a load or a source like a battery 16, in the following only referred to as load. The energy storage 13 is connected to a high-voltage DC bus 11, while the load 16 is connected to a low-voltage DC bus 12. Power can be transferred between the DC busses via a DC/DC converter 15. The DC/DC converter 15 comprises a number of DC/DC converter modules labelled 15.1, 15.2, up to 15.n. The DC/DC converter modules are arranged in parallel to each other to achieve optimum conversion efficiency between high-voltage DC bus 11 and low-voltage DC bus 12. The DC/DC converter 15 is controlled by vehicle controller 19 through a smart controller 18. The smart controller 18 is connected to the bidirectional DC/DC converter 15 via an input control signal interface 14 and an output control signal interface 17. Moreover, the smart controller 18 is configured to process all signals coming from the input and the output side of the converter 15 and to give all the commands needed to turn on or off selected DC/DC converter modules 15.1-15.n to make the system operate at its optimum efficiency point.

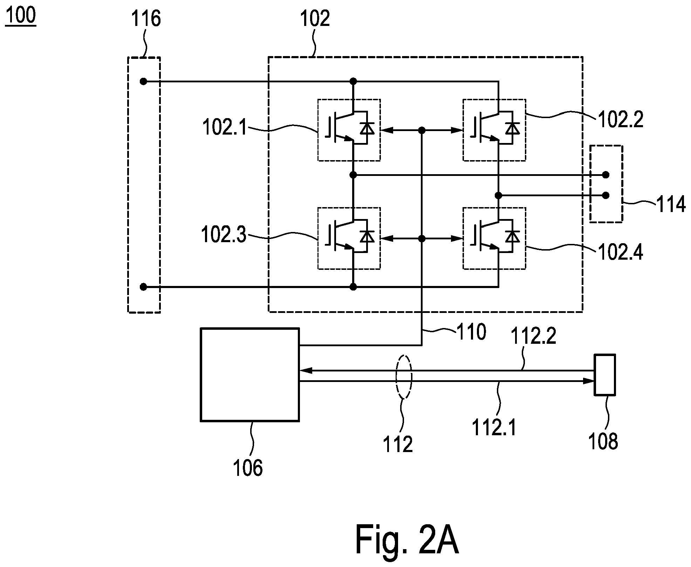

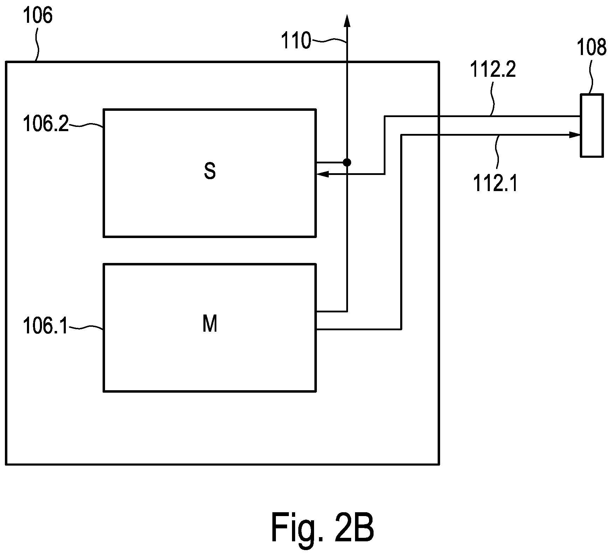

FIG. 1B shows another electronic circuit 20 from the prior art. The electronic circuit 20 comprises, like in the example of FIG. 1A, the energy storage unit 13 connected to the high-voltage DC bus 11 and the electric load, or a source like a battery, 16 connected to the low-voltage DC bus 12. In the electronic circuit 20 of FIG. 2, the high-voltage DC bus 11 and the low-voltage DC bus 12 are connected to each other via a DC/DC converter 25. Like the DC/DC converter 15, the DC/DC converter 25 also comprises a plurality of converter modules labelled 25.1 up to 25.n. In contrast to the converter 15, the DC/DC converter 25 is not controlled by an external controller, but through a configuration of internal controllers. To this end, the converter module 25.1 comprises a master controller unit 25.1.1 and each of the other converter modules 25.2-25.n comprise a respective slave controller unit 25.2.1-25.n.1. The master controller unit 25.1.1 is electrically connected to each of the slave controller units 25.2.1-25.n.1 via electric wires as is indicated by the arrows pointing from the master controller unit 25.1.1 to the slave controller modules 25.2.1-25.n.1. Moreover, the master controller unit 25.1.1 is configured to regulate the system output voltage and ensure equal current sharing among the modules 25.1-25.n by generating appropriate switching signals, which are transmitted to each of the slave controllers 20.2.1-20.n.1.

In FIG. 1C, an electronic circuit 30 from the prior art is shown, which is identical to the electronic circuit 20 except that DC/DC converter modules 35.1.1-35.n.1 of a DC/DC converter 35 do not communicate through a wire-bound connection but rather through a wireless connection.

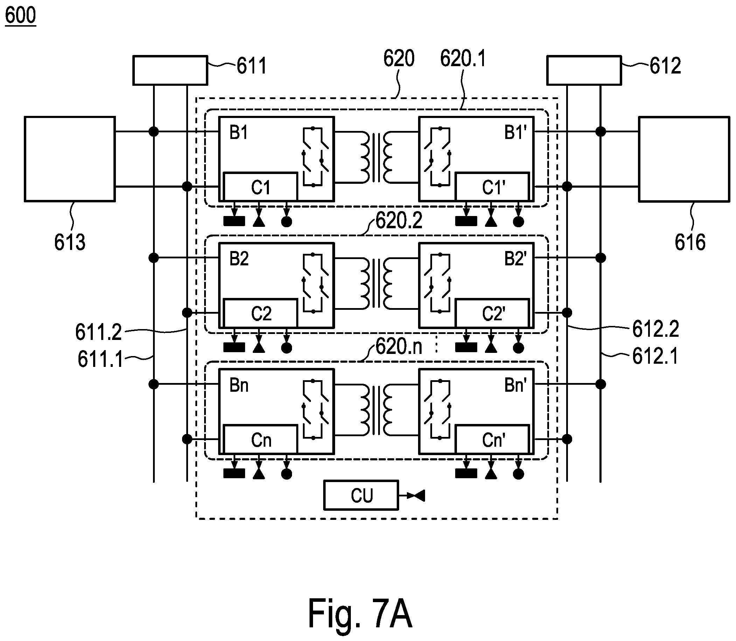

All of the DC/DC converter circuits described are assembled using a plurality of converter modules. However, the converter modules of the prior art only allow, among other disadvantages, a narrow design space for the construction of DC/DC converter circuits. The idea of the invention is to provide a converter building block that allows, among other advantages, a much wider range of designs for the construction of DC/DC converter circuits as well as a higher reliability. In the following, different embodiments of the converter building blocks according to the invention will be described with reference to FIG. 2A to FIG. 6. Different DC/DC converter circuits that are based on the converter building block will be described with reference to FIG. 7A to FIG. 9.

In the following a first embodiment of a converter building block according to the invention will be described with reference to FIG. 2A and FIG. 2B.

FIG. 2A shows a converter building block 100 according to the invention, which is adapted for use in a modular isolated active bridge, in particular multi-active-bridge, DC/DC converter circuit.

The converter building block 100 includes a converter circuit 102, to establish a full-bridge converter circuit (H-bridge circuit) and here comprises four switching elements 102.1-102.4, wherein the switching elements 102.1-102.4 are realized through a parallel --more precisely antiparallel-- arrangement of a diode and a transistor. However, in other embodiments the switching elements 102.1-102.4 are also realized with other means known in the art. The converter circuit 102 further comprises an inductance-side terminal 114 for electrically connecting the converter circuit 102 to a transformer, in particular frequency transformer, and a DC-bus-side terminal 116 for electrically connecting the converter circuit 102 to a DC bus. The converter circuit 102 is configured to generate, using the switching elements 102.1-102.4, from a DC voltage provided at the DC-bus-side terminal 116 a AC voltage and provide the AC voltage at the inductance-side terminal 114. Furthermore, the converter circuit 102 is also configured to generate, using the switching elements 102.1-102.4, from an AC voltage provided at the inductance-side terminal 114 a DC voltage and provide the DC voltage at the DC-bus-side terminal 116.

Moreover, the converter building block comprises a controller unit 106 that is embedded into the converter building block 100. The controller unit 106 is configured to generate an internal switching-element control signal 110, often also referred to as firing pulse, for controlling an operation of the switching elements 102.1-102.4 and to provide, through a respective signaling connection, the internal switching-element control signal 110 to the switching elements 102.1-102.4 of the converter circuit 102.

In addition, the converter building block 100 comprises a switching-element control interface 108 that is also electrically connected to the controller unit 106. The switching-element control interface 108 is configured to send an outgoing switching-element control signal 112.1 for controlling switching elements of one or more other converter building blocks and to receive an incoming switching-element control signal 112.2 adapted for controlling the switching elements 102.1-102.4 of the converter circuit 102 in converting DC voltage into AC voltage and vice versa.

The controller unit 106 will be described in more detail in the following with reference to FIG. 2B.

FIG. 2B shows the controller unit 106 of the converter building block 100 of FIG. 2A in more detail. To facilitate a detailed description of the controller unit 106, FIG. 2B shows only a section of the converter building block 100 comprising the controller unit 106 and its internal structure, the switching-element control interface 108 as well as their respective signaling connections to and from the controller unit 106. For simplicity, FIG. 2B does not show the converter circuit 102, but only the respective signaling connecting between the controller unit 106 and the converter circuit 102.

In the embodiment 100 of the converter building block, the controller unit 106 is a digital controller. Furthermore, the controller unit 106 is selectively operable in a master operation mode M and in a slave operation mode S. To this end, the controller unit 106 comprises a master control unit 106.1 and a slave control unit 106.2. Depending on the operation mode, either the master control unit 106.1 or the slave control unit 106.2 is active while the other unit is inactive.

The controller unit 106 is configured, when operating in the master operation mode M, to generate the internal switching-element control signal 110. Moreover, the controller unit 106 is configured, when operating in the master operation mode M, to generate the outgoing switching-element control signal 112.1 in accordance with the internal switching-element control signal 110. To this end, the master operation unit 106.2 is electrically connected to the converter circuit 102 and to the switching-element control interface 108.

Furthermore, the controller unit 106 is configured, when operated in the slave operation mode S, to generate the internal switching-element control signal 110 using the incoming switching-element control signal 112.2. To this end, also the slave control unit 106.2 is electrically connected to the switching-element-control interface.

In further embodiments of the converter building block 100, the controller unit 106 is configured to generate the internal switching-element control signal 110 or the outgoing switching-element control signal 112.1 is in the form of a pulse-width-modulated (PWM) signal. The internal switching-element control signal 110 and the outgoing switching-element control signal 112.1 are also known in the literature as firing pulses. How the internal switching-element control signal 110 and the outgoing switching-element control signal 112.1 are related depends on a control algorithm that is executed by the controller unit 106, wherein the control algorithm can be adapted depending on a topology of a DC/DC converter circuit in which the converter building block 100 is used. For example, in a dual-active-bridge (DAB) configuration a phase shift control of a primary converter bridge and a secondary converter bridge of a DAB converter circuit with a primary and a secondary converter bridge is advantageous. In such a situation, the converter building block forming the primary converter bridge will be operated in the master operation mode M and generate 50% duty ratio PWM and the converter building block forming the secondary converter bridge will be operated in the slave operation mode and generate PWM by reading voltage and current measurements with suitable phase shift from the primary PWM.

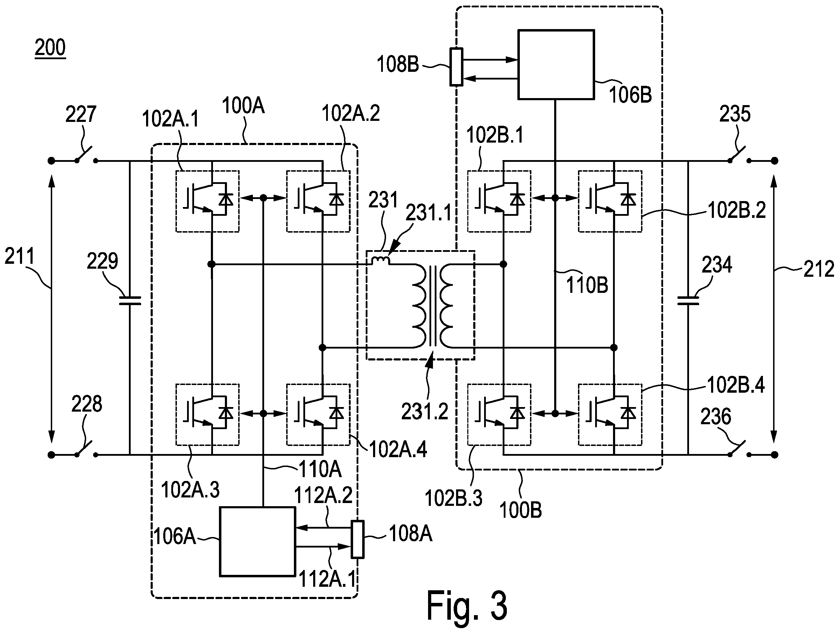

To illustrate the use of the converter building block for constructing a modular isolated active bridge, in particular multi-active-bridge, DC/DC converter circuit, a first example of an isolated dual-active-bridge (DAB) converter circuit comprising two converter building blocks according to the invention will be described in the following with reference to FIG. 3.

FIG. 3 shows an isolated dual-active-bridge (DAB) converter circuit 200 comprising two converter building blocks 100A and 100B.

The DAB converter circuit 200 shown in FIG. 3 is an example of how the converter building block 100 of FIG. 2A and FIG. 2B can be used to assemble a DC/DC converter circuit. The converter building blocks 100A and 100B include a converter circuit to establish a full-bridge converter circuit (H-bridge circuit) and thus are identical to the converter building block 100 as shown in FIG. 2A and FIG. 2B. For the component of the converter building blocks 100A, 100B identical reference signs as in FIG. 2A are used, except for an added "A" or "B" to differentiate between the components of the converter building blocks 100A and 100B, respectively.

Besides the two converter building blocks 100A and 100B, the DAB converter circuit 200 comprises an inductive element 231 comprising an inductor 231.1 and a transformer circuit 231.2, in particular a frequency transformer circuit, in this case a medium frequency transformer circuit. To inductively couple the converter building blocks to each other, the inductance-side terminals of the converter building blocks 100A and 100B are electrically connected to opposite sides of the transformer circuit 231.2, in particular frequency transformer circuit, in this case a medium frequency transformer circuit. Depending on a direction of power flow, either the converter circuit 102A or the converter circuit 102B provide a varying voltage to the inductive element 231, while the other converter circuit receives a respective varying voltage on the other side of the transformer circuit 231.2, in particular frequency transformer circuit, in this case a medium frequency transformer circuit.

Depending on the requirements related to the inductive element 231, the magnitude of the inductance of the inductive element 231 can be adapted. For example, in some embodiments of the DAB converter circuit 200 where a leakage inductance of transformer circuit 231.2,, in particular frequency transformer circuit, in this case a medium frequency transformer circuit, is sufficient, the inductor 231.1 is left out. In other embodiments, where a higher inductance is required, a second inductor is connected in series with the inductor 231.1.

Furthermore, the DC-bus-side terminal of the converter building block 100A is electrically connected to a positive line and a negative line of a high-voltage DC bus 211 through line contactors 227 and 228, respectively. Through the DC-bus-side terminals, the converter building block 100B is electrically connected to a positive line and a negative line of a low-voltage DC bus 212 through line contactors 235 and 236, respectively. The line contactors 227, 228, 235, and 236 are used to connect or disconnect the DAB converter circuit from the respective DC bus.

Moreover, in parallel to the converter building block 100A and the converter building block 100B, a DC-link capacitor 229 and a DC-link capacitor 234 are connected.

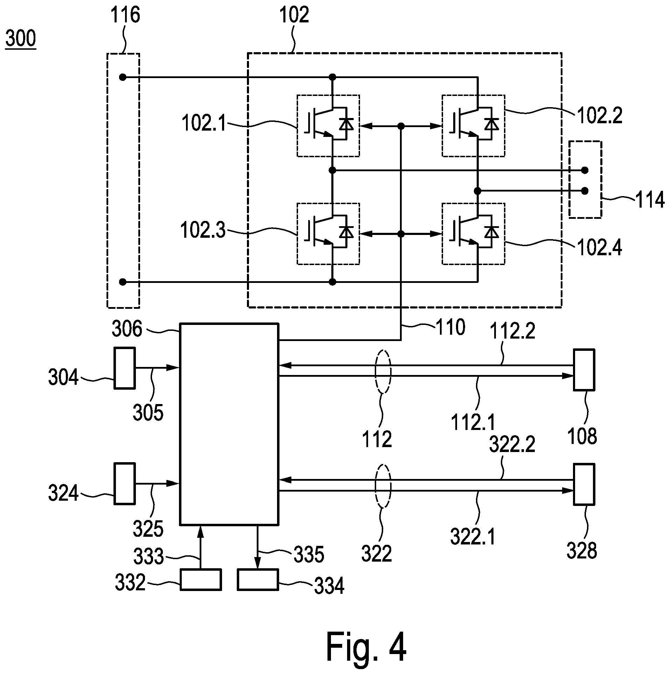

One of the advantages of the converter building block according to the invention is the possibility to use the same converter building blocks for constructing very different DC/DC converter circuit topologies. Further examples for the use of converter building blocks within different DC/DC converter circuits will be described further below. Before turning to those examples, alternative embodiments of the converter building block 100 will be described in the following with reference to FIGS. 4-6.

FIG. 4 shows an alternative embodiment 300 of a converter building block according to the invention, wherein the converter building block 300 additionally comprises a controller-configuration interface 304, a sensor interface circuit 324, a feedback-exchange interface 328, and a health-status interface 332 for communication health-status information.

The converter building block 300, which comprises a converter circuit 102 to establish a full-bridge converter circuit (H-bridge circuit), is largely identical to the converter building block 100. For those components of the converter building block 300 that are identical to the converter building block 100 identical reference signs as in FIG. 2A and FIG. 2B are used. For brevity, only those components of converter building block 300 will be described in the following that differ from converter building block 100. For a description of identical components, the reader is referred to the description of FIG. 2A and FIG. 2B.

The converter building block 300 comprises a controller-configuration interface 304. The controller-configuration interface 304 is configured to receive a controller-configuration signal 305 indicative of controller-configuration information and to provide the controller-configuration signal 305, through a respective signaling connection, to the controller unit 306. In particular, the controller-configuration interface 304 is configured to receive the controller-configuration information from a central control unit that can also be connected to other converter building block comprised within a given DC/DC converter circuit.

The controller unit 306 is configured to receive the controller-configuration information through the central-control-unit communication interface 304. The controller-configuration information comprises information about whether the controller unit 306 is requested to operate in the master operation mode M or the slave operation mode S. Moreover, in some embodiments of the converter building block, the controller-configuration information further comprises current values, voltage values or power values as reference values. Moreover, in other embodiments, the controller-configuration information also comprises an indication whether the controller is required to operate in a voltage/current regulator or a droop control mode. In this regard, the use of the controller-configuration information is particularly advantageous, since it allows a change of the way the controller unit is operated without changing any hardware or software of the converter building block.

In the controller-configuration information also another information can be included. As an example another information like a priority assignment to a new connected converter building block to an existing DC/DC converter can be included. In a fully autonomous system, the priority assignment can be advantageous when all the controllers can be assigned as the master. Also, additionally or alternatively, the central-control unit or, if the existing master or central-control unit fails, the slaves with the highest priority can take over the role and the other slaves can increase the priority level. As an advantage subsequent failures on the master or central-control unit will always have a replacement from the available slave units.

In comparison to a converter building block 100, the converter building block 300 is configured to receive sensor information from one or more sensors and either, when in slave operation mode, provide this sensor information to another converter building block that is operated in the master operation mode, or, when in master operation mode, use the sensor information to control the generation of the internal switching-element control signal 110 or the outgoing switching-element control signal 112.1.

To this end, the converter building block 300 comprises the sensor-interfacing circuit 324 that is electrically connected to the controller unit 306. In the embodiment of FIG. 34, the sensor-interfacing circuit 324 is an interface that is configured to be electrically connected to a voltage sensor and a current sensor. Furthermore, the sensor-interfacing circuit 324 is configured to receive a sensor-information signal 325, wherein the sensor-information signal 325 is indicative of voltage sensor information from the voltage sensor and current sensor information from the current sensor.

Moreover, the converter building block 300 comprises the feedback-exchange interface 328 that is connected through a respective signaling connection to the controller unit 306 and that is configured to send and receive feedback-exchange signals 322.

The controller unit 306 is configured to perform all the tasks of the controller unit 106 of the converter building block 100. In addition, the controller unit 306 is configured, in the slave operation mode S, to provide at the feedback exchange interface 328 an outgoing feedback-exchange signal 322.1 indicative of at least a part of the sensor information received by the sensor-interfacing circuit 324.

Furthermore, the controller unit 306 is configured, in the master operation mode M, to receive an incoming feedback-exchange signal 322.2 from one or more other converter building blocks and to use the feedback-exchange signal 322.2 for generating the internal switching-control signal 110 and the outgoing switching-element control signal 112.1.

In the embodiment of the converter building block 300, the controller circuit 306 is configured to compare voltage values and current values comprised within the feedback-exchange signal to pre-set reference voltage values and reference current values and adjust the internal switching-control signal 110 and the outgoing switching-element control signal 112.1 according to a difference between the received and the reference values.

Furthermore, the converter building block 300 is also configured to receive a synchronization signal from, for example, a central control unit to synchronize its actions with regard to the actions of other converter building blocks within the same DC/DC converter circuit. To this end, the converter building block 300 comprises a synchronization interface 332 that is configured to receive an incoming synchronization signal 333 indicative of one or more timing requirements. Furthermore, the controller unit 306 is additionally configured, in the master operation mode M, to generate the internal switching-element control signal 110 and the outgoing switching-element control signal 112.1 in accordance with the timing requirements.

Furthermore, the converter building block 300 is also configured to provide a health statues, for example, to a central control unit. To this end, the converter building block comprises a health status interface 334 that is configured to externally provide an outgoing health-status-information signal 335 indicative of a health status of the converter building block 300.

Furthermore, the controller unit 306 is configured, in the master operation mode M or in the slave operation mode S, to determine the health status and to generate and provide the outgoing health-status-information signal 335 in accordance with the health status.

The functionalities regarding the provision of the feedback-exchange signal, the synchronization signal, the controller-configuration information, and the health status are independent of each other. As a result, some embodiments of the converter building block are only configured to provide a subset of these functionalities. Furthermore, in other embodiments of the converter building block, the sensor-interfacing circuit is configured to be electrically connectable to also other sensors, such as temperature sensors and vibrations sensors. In yet other embodiments, the sensor-interfacing circuit 324 is configured to be electrically connected to sensors comprised within the converter building block itself.

The embodiments of the converter building block described above are already modular in the regard that they can be used to build isolated active bridge, in particular multi-active-bridge, DC/DC converter circuits in various configurations. Moreover, due to the controller unit that is configured to operate in the master operation mode or the slave operation mode, the converter building block provides a high redundancy and, as a result, a high reliability. Nevertheless, the described converter building blocks, in particular with regard to the controller-configuration information, require input from a central control unit. In the following, embodiments of the converter building block will be described with reference to FIG. 5A to FIG. 6 that are additionally configured to take over the role of a central control unit. A first embodiment comprising a converter building block that is configured to operate in a central-control-unit operation mode will be given in the following with reference to FIG. 5A and FIG. 5B.

FIG. 5A shows an embodiment of a converter building block 400, which comprises a controller unit 406 that is configured to operate in a central-control-unit operation mode.

The converter building block 400, which comprises a converter circuit 102 to establish a full-bridge converter circuit (H-bridge circuit), is largely identical to the converter building block 100 of FIG. 2A and FIG. 2B. Those components of the converter building block 400 that are identical to those of the converter building block 100 are identified using the same reference signs. For brevity, only those aspects of the converter building block 400 will be described in the following that differ from the converter building block 100. For a description of any identical components, the reader is referred to the description of FIG. 2A and FIG. 2B.

The converter building block 400 comprises a controller-configuration interface 404 electrically connected to a controller unit 406. Similar to the controller-configuration interface 304, the controller-configuration interface 404 is configured to receive controller-configuration information. However, in contrast to the controller-configuration interface 304, the controller-configuration interface 404 is a bidirectional communication interface that is also configured to externally provide the controller-configuration information.

Identically to the controller unit 106 of the converter building block 100, the controller unit 406 is configured to operate in the master operation mode M and the slave operation mode S. In addition, the controller unit 406 is also configured to operate in the central-control-unit operation mode C. Moreover, the controller unit 406 is configured, in the central-control-unit operation mode C, to generate the controller-configuration information and to provide the controller-configuration information through the controller-configuration interface 406 to one or more other converter building blocks. In the following, the controller unit 406 will be described in more detail with reference to FIG. 5B.

FIG. 5B show the controller unit 406 of the converter building block 400 of FIG. 5A in more detail. To facilitate a detailed description of the controller unit 406, FIG. 5B shows only a section of the converter building block 400 comprising the controller unit 406 and its internal structure, the controller-configuration interface 404 and switching-element control interface 108 as well as their respective signaling connections to and from the controller unit 106. For simplicity, FIG. 5B does not show the converter circuit 102, but only the respective signaling connecting between the controller unit 406 and the converter circuit 102.

Similarly to the converter building block 400 itself, also the controller unit 406 is largely identical to the controller unit 106 of the converter building block 100 of FIG. 2A and FIG. 2B. For brevity, therefore, the following description of the controller unit 406 will only focus on those aspects of the controller unit 406 that differ from the controller unit 106. For a description of those components of the controller unit 406 that are identical to those of the controller unit 106, the reader is referred to the description of FIG. 2B. All components of the controller unit 406 that are also included in the controller unit 106 are labelled using the same reference sign.

The controller unit 406 is configured to operate in the central-control-unit operation mode C. To this end, the controller unit 406 comprises a central control unit 406.3, wherein the central control unit 406.3 is connected through a signaling connection to the controller-configuration interface 404 to send and/or to receive the controller-configuration information 405.1, 405.2. Moreover, the central control unit 406.3 is configured to send and/or receive central-control-unit configuration information 405.1, 405.2 through the controller-configuration interface 404. In addition, the central control unit 406.3 is connected through a respective signaling connection to the master control unit 106.2 to directly provide the controller-configuration information also to the master control unit 106.2.

In order to configure the central control unit 406.3, the central control unit 406.3 is configured to receive central-control-unit configuration information through the controller-configuration interface 404. Depending on the specific circumstances in which the converter building block 400 is used, the central-control-unit configuration information include, for example, current values, voltage values or power values as reference values, an indication whether the DC/DC converter circuit is to be operated in voltage/current regulator control mode or droop control mode or a system start/stop sequence.

Preferably, there can be another high-level controller or direct user command that can configure the central-control unit. In this scenario, the other information can include the number of master and slave units connected to the system and/or unique identifiers of all units connected to the system, Other information can also include as how the relation is between one unit relative to the others (e.g. master-slave subsystem configuration, all slave configuration, etc.), and absolute time reference for synchronization.

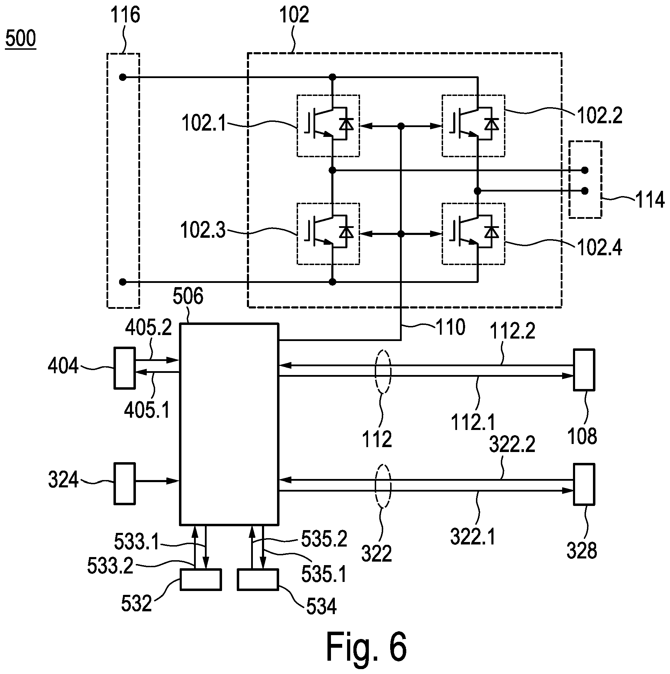

Neglecting the additional central control unit 406.3 within the controller unit 406, the functionalities of the converter building block 400 are identical to those of the converter building block 100 of FIG. 2A and FIG. 2B. For those embodiments providing additional more functionalities, like the converter building block 300 of FIG. 4, also the central control unit 406.3 of the controller unit 406 has to be adapted accordingly. In the following, an embodiment of the converter building block 300 in combination with a controller unit that is configured to operate in the central-control-unit operation mode will be described with reference to FIG. 6.

FIG. 6 shows yet another embodiment of a converter building block 500, which comprises a controller unit 506 that is configured to operate in a central-control-unit operation mode C.

The converter building block 500, which comprises a converter circuit 102 to establish a full-bridge converter circuit (H-bridge circuit), combines functionalities of the converter building block 300 of FIG. 4 and the converter building block 400 of FIG. 5A and FIG. 5B. All those elements of the converter building block 500 that are identical to either the converter building block 300 or the converter building block 400 are labeled using identical reference signs and, in the following, will not be described again. Instead, the following description will focus on those elements of the converter building block 500 that differ from the converter building block 300 and the converter building block 400 as described above.

The converter building block 500 is configured to provide health status information to, for example, a central control unit, to receive a synchronization signal from, for example, a central control unit, and to provide to or receive from one or more other converter building blocks a feedback-exchange signal indicative of sensor information. Moreover, the converter building block 500 comprises a controller unit 506 that is configured to operate in parallel to the master or slave operation mode in a central-control-unit operation mode and, as a result, act as a central control unit. In the following, each of these functionalities will be described in greater detail.

Like the converter building block 300, the converter building block 500 comprises a health-status interface 534 that is configured to externally provide an outgoing health-status-information signal 535.1 indicative of the health status of the converter building block 500, for example, to a central control unit. The controller unit 506 is configured, in the master operation mode M or in the slave operation mode S, to determine the health status of the converter building block 500 and, using the health status, generate the outgoing health-status-information signal 535.1. Furthermore, the health-status interface 534 of the converter building block 500 is a bidirectional interface that is also configured to receive an incoming health-status-information signal 535.2 from one or more other converter building blocks. Furthermore, the controller unit 506 is configured, when in the central-control-unit operation mode C, to generate the configuration information using information about the health status of the one or more other converter building blocks comprised within the incoming health-status-information signal 535.2 and provide the generated controller-configuration information 405.1, 405.2 at the bidirectional controller-configuration interface 404.

Furthermore, the converter building block 500 is configured to receive an incoming synchronization signal from, for example, a central control unit to synchronize its actions with regard to the actions of other converter building blocks within the same DC/DC converter circuit when operated in the master operation mode M. To this end, the converter building block 500 comprises a synchronization interface 532 that is configured to receive an incoming synchronization signal 533.2 indicative of one or more timing requirements. Furthermore, the controller unit 506 is configured, in the master operation mode M, to generate the internal switching-element control signal 110 and the outgoing switching-element control signal 112.1 in accordance with the timing requirements. Moreover, the synchronization interface 532 is a bidirectional interface and the controller unit 506 is configured, when operated in the central-control-unit operation mode C, to generate an outgoing synchronization signal indicative of one or more timing requirements and provide the outgoing synchronization signal 533.1 to, for example, one or more other converter building blocks through the synchronization interface 532.

The above mentioned timing requirements are generated by the controller unit preferably in that the central-control unit, after being assigned to take the role, will generate/send its own absolute time reference to the other converters connected to the system. Preferably this can come along with the necessary phase shift depending upon the topology and/or the control mode that the system/units need to run in. When the system requires a central-control unit, all the units need to be synchronized to the central-control unit by using the absolute time reference from the central-control unit.

In the following, examples of different DC/DC converter circuits comprising embodiments of the converter building block are described with reference to FIG. 7A to FIG. 9.

FIG. 7A shows an embodiment of a DC/DC converter arrangement comprising a high-voltage DC bus, a low-voltage DC bus, and a DC/DC converter circuit including converter building blocks according to the invention, in particular as explained in the aforementioned embodiments.

Each bus comprises a positive line 611.1 and 612.1 and a negative line 611.2 and 612.2, respectively. The positive line 611.1 and the negative line 611.2 of the low-voltage DC bus 611 are electrically connected to an energy storage unit 613. Moreover, the positive line 612.1 and the negative line 612.2 of the low-voltage DC bus 612 are electrically connected to a battery or a load 616.

The high-voltage DC bus 611 and the low-voltage DC bus 612 are electrically connected to each other through a DC/DC converter circuit 620. The DC/DC converter circuit 620 comprises a plurality of isolated DAB converter circuits labelled 620.1 to 620.n. The label 620.n is used to indicate that the number of DAB converter circuits may differ between variants of the DC/DC converter circuit 620. The DAB converter circuits 620.1 to 620.n are electrically connected to the positive and negative lines of the high-voltage DC bus 611 and the low-voltage DC bus 612 in an input parallel, output parallel (IPOP) configuration.

Each of the DAB converter circuits 620.1 to 620.n comprises two converter building blocks labelled B1, B1', ..., Bn, Bn'. The converter building blocks B1, B1', ..., Bn, Bn' are arranged in two columns, wherein the converter building blocks B1, B2, ..., Bn are electrically connected to the high-voltage DC bus 611 and serve as primary converter bridges and the converter building blocks B1', B2', ..., Bn' are electrically connected to the low-voltage DC bus 612 and serve as secondary converter bridges. The converter building blocks B1, B1', ..., Bn, Bn' are depicted in a simplified form only showing an abstract illustration of the full-bridge converter circuit and the controller unit labelled C1, C1', ..., Cn, Cn' comprised within each converter building block B1, B1', ..., Bn, Bn'. In the example shown in FIG. 7A, the converter building blocks B1, B1', ..., Bn, Bn' are similar to those of FIG. 4. However, the converter building blocks B1, B1', ..., Bn, Bn' could also be any other converter building block according to the invention. Each of the converter building blocks belonging to one DAB converter circuit are inductively coupled to each other through a transformer, in particular frequency transformer, depicted as two coils in FIG. 7A. Furthermore, the converter circuit 620 comprises a central control unit labelled CU.

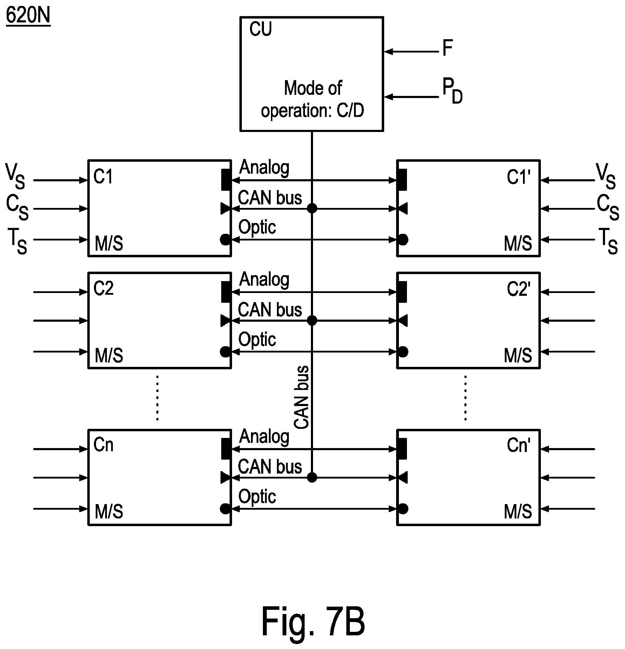

Three arrows located at each converter building block B1, B1', ..., Bn, Bn' marked each with either a rectangle, a triangle or a circle and one arrow marked with a triangle situated at the central control unit CU are indicating three communication channels through which the converter building blocks B1, B1', ..., Bn, Bn' exchanges communication signals between each other and with the central control unit CU. Different network topographies of the communication channels are possible. In the following, one of those topographies will be described with reference to FIG. 7B.

FIG. 7B shows an embodiment of a communication network 620N connecting the converter building blocks B1, B1', ..., Bn, Bn' of the DC/DC converter circuit 620 of FIG. 7A.

FIG. 7B depicts the central control unit CU and the controller units C1, C1', ..., Cn, Cn' representative for each of the converter building blocks B1, B1', ..., Bn, Bn' of the DC/DC converter circuit 620. Moreover, FIG. 7B depicts a plurality of arrows marked with either the rectangle.

In Fig. 7B, it is indicated through "Mode of operation: C/D" that the central control unit CU is able to operate in two modes. A preferred detail on those modes of operation is given as follows.

C/D refers to "Centralized control" and "Distributed control". For centralized control, the central-control unit will need to synchronize all the units to its own time reference, and give timing-related commands based on the chosen system topology and/or the control method. Furthermore, the central-control unit will regularly give command to each unit for the power-flow control within the system. For distributed control, the central-control unit will not control the system power flow as it will be done by one or more units acting in a master mode. However, the central-control unit will check the status of all the units and to assess whether a different configuration of the system is required based on the status of all the units.

Firstly, the converter building blocks B1, B1', ..., Bn, Bn' comprised within a single DAB converter circuit 620.1, ..., 620.n are connected to each other through an analog communication channel indicated by the arrow marked with the rectangle and labelled "Analog". In the embodiment of the DC/DC converter circuit 620, the feedback-exchange interface is connected to the analog communication channel such that the converter building blocks comprised within a single DAB converter circuit 620.1-620.n can exchange sensor information, such as the feedback-exchange signal, through the analog connection. In the embodiment of the converter building blocks B1, B1', ..., Bn, Bn', sensor information regarding voltage, current, and temperature are exchanged. The voltage, current, and temperature sensor information are received by each controller unit C1, C1', ..., Cn, Cn' as indicated by the three arrows to either the left or right of the controller unit labelled, in the case of controller unit C1 and C1', Vs, Cs, and Ts. The analog channels are designed to be bidirectional so that each converter building block can receive and transmit analog signals when required. For safety concerns, the analog channels can be equipped with electrical isolation to make each converter building block B1, B1', ..., Bn, Bn' fully isolated.

Moreover, the converter building blocks B1, B1', ..., Bn, Bn' comprised within a single DAB converter circuit are also connected to each other through an optical communication channel indicated by the arrow marked with the circle and labelled "Optic". In the embodiment of the DC/DC converter circuit 620, optical communication channel is used to send and receive switching-element control signals. In this case, controller unit C1 can send (or receive) switching-element control signals to (or from) controller unit C1'. This is also true between controller unit C2 and C2' as well as controller unit Cn and controller unit Cn'. The analog channels in combination with the optical channels enable one controller block to control its own switching elements as well as the switching elements of one other converter building block within a single DAB converter circuit. By using this configuration, one controller unit acts as a master controller while the other acts as slave controller. For instance, all the primary bridge controllers C1, ..., Cn can be set to operate in the master operation mode M while all the secondary bridge controllers C1', ..., Cn' are set to operate in the slave operation mode S. The master controller will process all sensor information from both converter building blocks and generate and provide switching signals to the switching elements based on a control algorithm implemented in the controller unit. At the same time, the controller unit operating in the slave operation mode S can also monitor the conditions at its own converter building block. Moreover, the slave controller can provide a controller redundancy in case the master controller fails.

The arrows marked with the triangle connecting the central control unit CU and the controller units C1, C1', ..., Cn, Cn' with each other indicate a control area network (CAN) bus label "CAN bus". In the embodiment of the DC/DC converter circuit 620, the CAN bus is used by the central control unit CU to distribute the controller-configuration information to each of the converter building blocks B1, B1', ..., Bn, Bn'. Depending on the configuration information received by each converter building block B1, B1', ..., Bn, Bn', the respective controller unit C1, C1', ..., Cn, Cn' is configured to either act in the master operation mode M or the slave operation mode S indicated by the label "M/S" in each of the controller units C1, C1', ..., Cn, Cn'. Furthermore, the CAN bus is also used for a distribution of a synchronization signal and system start/stop sequence depending upon the system requirement and fault indications from the central control unit CU to the converter building blocks B1, B1', ..., Bn, Bn'. In the embodiment of the DC/DC converter arrangement 600, the central control unit CU, for example, receives fault indications and power demands from an external source as indicated by the arrows marked F and P_{D}, respectively. The CAN bus can also be used to provide feedback signals from sensors as a redundancy to the analog communication channel.

It is also possible to operate the controller unit of one of the converter building blocks in the central-control-unit operation mode to govern the overall system and replace the central control unit CU. In variants of this embodiment, this functionality is passed to the controller unit of other converter building block within the DC/DC converter circuit 620 based on a predefined order, thus making the system truly modular and self-contained.

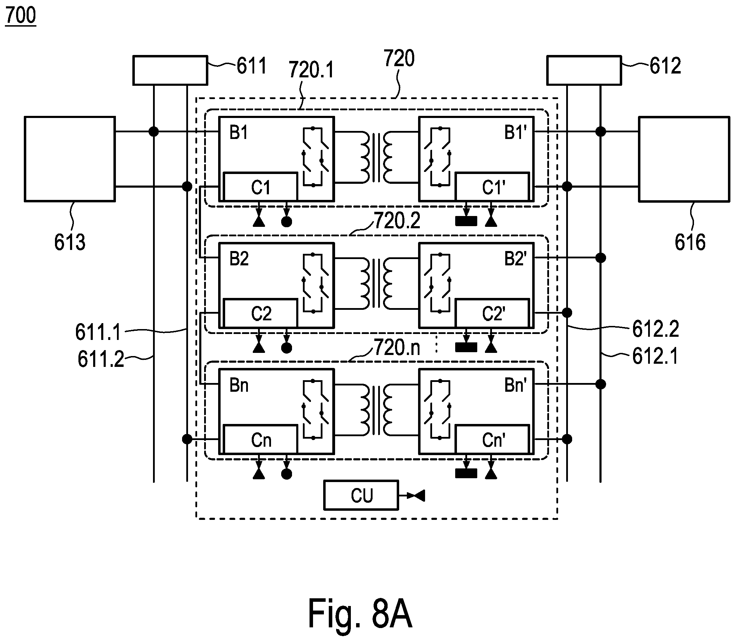

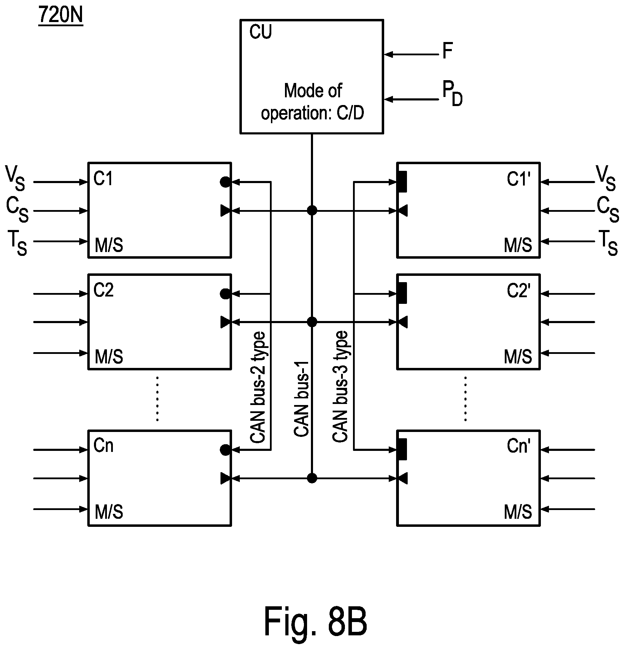

The converter building blocks can be combined in various ways to also form other DC/DC converter circuits. Another such example will be described in the following with reference to FIG. 8A and FIG. 8B.

FIG. 8A shows an alternative embodiment of a DC/DC converter arrangement 700 with a DC/DC converter circuit 720 comprising a converter building block according to the idea of the invention.

The DC/DC converter arrangement 700 shown in FIG. 8A only differs from that of FIG. 7A in the DC/DC converter circuit. Consequently, all components of the DC/DC converter arrangement 700 that are already known from FIG. 7A are labelled in FIG. 8A using identical reference labels as in FIG. 7A. These components will not be described again. Instead, the following description of the DC/DC converter arrangement 700 will focus on the different DC/DC converter circuit.

As in FIG. 7A, the DC/DC converter circuit 720 comprises plurality of DAB converter circuits 720.1, ..., 720.n, wherein each DAB converter circuit 720.1, ..., 720.n comprises two converter building blocks B1, B1', ..., Bn, Bn'. The converter building blocks B1, B1', ..., Bn, Bn' are largely identical to the converter building blocks of FIG. 7A, except that each of the converter building blocks B1, B1', ..., Bn, Bn' comprise is connected to only two communication channels marked either with a triangle, a rectangle or a circle. Furthermore, in difference to the DC/DC converter circuits 620 of FIG. 7A, the DAB converter circuits 720.1, ..., 720.n of the DC/DC converter circuit 720 are connected to the high-voltage DC bus 611 and the low-voltage DC bus 612 in a input-series-output-parallel (ISOP) configuration.

In the following, the communication network connecting the converter building blocks and the central control unit CU will be described with reference to FIG. 8B.

FIG. 8B shows an embodiment of a communication network 720N connecting the converter building blocks B1, B1', ..., Bn, Bn' of the DC/DC converter circuit 720 of FIG. 8A. For simplicity, only the controller unit C1, C1', ..., Cn, Cn' of each converter building block is depicted along with the central control unit CU and the communication channels.

In contrast to the DC/DC converter circuit 620 of FIG. 7A and FIG. 7B, the DC/DC converter circuit 720 utilizes three CAN busses to realize the communication between the converter building blocks B1, B1', ..., Bn, Bn' and the central control unit CU.

A first CAN bus labelled "CAN-bus 1 type" and marked with a tringle, connects the central control unit CU and the converter building blocks B1, B1', ..., Bn, Bn' with each other. The first CAN bus is particularly used by the central control unit CU to distribute the controller-configuration information to each of the converter building blocks B1, B1', ..., Bn, Bn'. Furthermore, the first CAN bus can be used to send other non-real-time information between the central control unit CU and the converter building blocks B1, B1', ..., Bn, Bn' such as system status, power command, and fault indications.

A second CAN bus labelled "CAN bus-2 type" and marked with a circle, connects all the controller units C1, ..., Cn of the primary converter bridges B1, ..., Bn with each other. The second CAN bus is used primarily to exchange switching-element control signals and feedback-exchange signals between the primary converter bridges B1, ..., Bn, wherein at least one of the primary converter bridges operates in the master operation mode M while the remaining primary converter bridges operate in the slave operation mode S.

A third CAN bus labelled "CAN bus-3 type" and marked with a rectangle, connects all the controller units C1', ..., Cn' of the secondary converter bridges B1', ..., Bn' with each other. Similar to the second CAN bus, the third CAN bus is used primarily to exchange switching-element control signals and feedback-exchange signals between the secondary converter bridges B1', ..., Bn', wherein at least one of the secondary converter bridges B1', ..., Bn' operates in the master operation mode M and the remaining secondary converter bridges in the slave operation mode S.

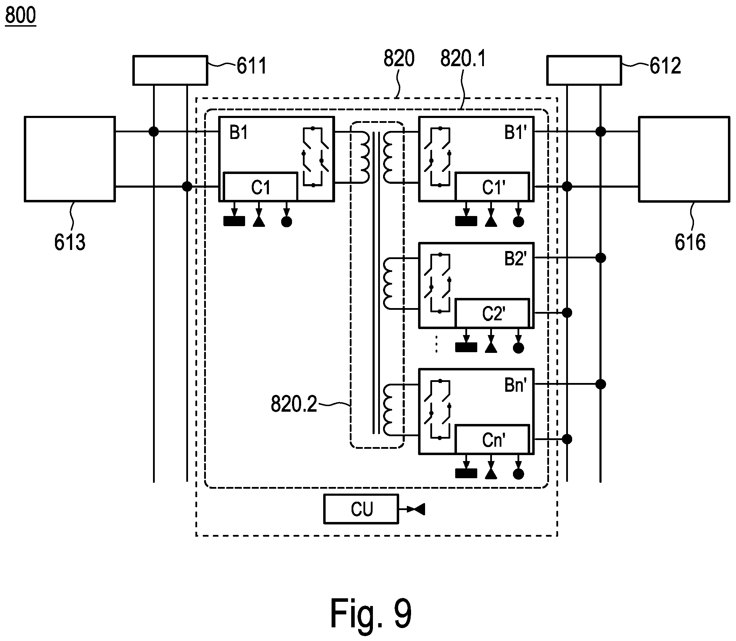

In the examples of the DC/DC converter arrangement of FIG. 7A to FIG. 9, all the DC/DC converter circuits comprise the same number of primary and secondary converter bridges. However, this is not a requirement for the use of the converter building blocks. The converter building blocks according to the invention can also be used in asymmetric configurations. An example of such a configuration will be described in the following with reference to FIG. 9.

FIG. 9 shows another alternative embodiment of a DC/DC converter arrangement 800 comprising with a DC/DC converter circuit 820, wherein the DC/DC converter circuit 820 has an asymmetric configuration of converter building blocks.

The DC/DC converter arrangement 800 shown in FIG. 9 only differs from that of FIG. 7A in the DC/DC converter circuit. Consequently, all components of the DC/DC converter arrangement 800 that are already known from FIG. 7A are labelled in FIG. 9 using identical reference labels as in FIG. 7A. These components will not be described again. Instead, the following description of the DC/DC converter arrangement 700 will focus on the different DC/DC converter circuit.

The DC/DC converter circuit 820 includes an isolated active bridge, in particular multi-active-bridge, converter circuit 820.1. The DAB converter circuit 820.1 comprises a single converter building block B1 as a primary converter bridge and a plurality of converter building blocks B1', .., Bn' as secondary converter bridges. The primary and the secondary converter bridges are inductively coupled to each other through an inductive element 820.2 comprising a frequency transformer. Furthermore, the DC/DC converter circuit 820 comprises a central control unit CU. Each of the converter building blocks B1, B1', .., Bn' is connected to a plurality of communication channels indicated by arrows at each controller unit C1, C1', .., Cn'. Furthermore, also the central control unit CU is connected to one of these communication channels. Various configurations of these communication channels are possible.

### LIST OF REFERENCE SIGNS

- 10: electronic circuit
- 11, 12: DC bus
- 13: energy storage unit
- 14: input control signal interface
- 15: DC/DC converter
- 15.1-15.n: DC/DC converter modules
- 16: battery
- 17: output control signal interface
- 18: smart controller
- 19: vehicle controller
- 20: electronic circuit
- 25: DC/DC converter
- 25.1-25.n: plurality of converter modules labelled
- 25.1.1: master controller unit
- 30: electronic circuit
- 35: DC/DC converter
- 100, 100A, 100B: converter building block
- 102,102A, 102B: converter circuit
- 106: controller unit
- 106.1: master control unit
- 106.2: slave control unit
- 108: switching-element control interface
- 110: internal switching-element control signal
- 112.1: outgoing switching-element control signal
- 112.2: incoming switching-element control signal
- 114: inductance-side terminal
- 116: DC-bus-side terminal
- 200: isolated dual-active-bridge (DAB) converter circuit
- 211,212: DC busses
- 227, 228: line contactors
- 229: DC-link capacitors
- 231: inductive element
- 231.1: inductor
- 231.2: transformer circuit
- 234: DC-link capacitor
- 235, 236: line contactors
- 300: converter building block
- 304: controller-configuration interface
- 305: controller-configuration signal
- 306: controller unit
- 322: feedback-exchange signals
- 322.1: outgoing feedback-exchange signal
- 322.2: incoming feedback-exchange signal
- 324: sensor interface circuit
- 325: sensor-information signal
- 328: feedback-exchange interface
- 332: synchronization interface
- 333: incoming synchronization signal
- 334: health status interface
- 335: outgoing health-status-information signal
- 400: converter building block
- 404: controller-configuration interface
- 405.1, 405.2: controller-configuration information, sent, received
- 406: controller unit
- 406.3: central control unit
- 500: converter building block
- 506: controller unit
- 532: bidirectional synchronization interface
- 533.1: outcoming synchronization signal
- 533.2: incoming synchronization signal
- 534: health-status interface
- 535.1: outgoing health-status-information signal
- 535.2: incoming health-status-information signal
- 600: DC/DC converter arrangement
- 611: DC bus
- 611.1: positive line
- 611.2: negative line
- 612: DC bus
- 612.1: positive line
- 612.2: negative line
- 613: energy storage unit
- 616: load
- 620: DC/DC converter circuit
- 620.1-620.n: converter circuits
- 620N: communication network
- 700: DC/DC converter arrangement
- 720: DC/DC converter circuit
- 720.1-720.n: converter circuits
- 720N: communication network
- 800: DC/DC converter arrangement
- 820: DC/DC converter circuit
- 820.1: converter circuit
- 820.2: inductive element
- C: central-control-unit operation mode
- Cs: current-sensor information
- CU: central control unit labelled
- F: fault indications
- M: master operation mode
- P_{D}: power demands
- S: slave operation mode
- Ts: temperature-sensor information
- Vs: voltage-sensor information

## Claims

1. A converter building block (100), wherein the converter building block is adapted for use in a modular isolated active bridge DC/DC converter circuit, in particular a multi-active-bridge DC/DC converter circuit, the converter building block (100) comprises a bidirectional DC/AC converter circuit comprising a number of switching elements (102.1-102.4), an inductance-side terminal (114) electrically connectable to a frequency transformer, and a DC-bus-side terminal (116) electrically connectable to a DC bus;
**characterized by**
- a controller unit (106), wherein the controller unit (106) is configured to generate an internal switching-element control signal (110) for controlling an operation of the switching elements (102.1-102.4);
- a switching-element control interface (108) configured to send an outgoing switching-element control signal (112.1) for controlling switching elements of one or more other converter building blocks and to receive an incoming switching-element control signal (112.2) adapted for controlling the switching elements (102.1-102.4) of the converter circuit (102); wherein
- the controller unit (106) is selectively operable in a master operation mode (M) and in a slave operation mode (S), wherein the controller unit (106) is configured
- when operated in the master operation mode (M), to generate the internal switching-element control signal (110) and to generate the outgoing switching-element control signal in accordance with the internal switching-element control signal (110), and
- when operated in the slave operation mode (S), to generate the internal switching-element control signal (110) using the incoming switching-element control signal (112.2).

2. The converter building block (300) according to claim 1, wherein
- the converter building block (300) comprises a controller-configuration interface (304) configured to receive controller configuration information (305), and wherein
- the controller unit (306) is configured, when operated in the master operation mode (M), to generate the internal switching-element control signal (110) using the controller-configuration information and to generate the outgoing switching-element control signal in accordance with the internal switching-element control signal (110) and the controller-configuration information.

3. The converter building block (300) according to claim 1 or claim 2, wherein the converter building block (300) comprises
- a sensor-interfacing circuit (324) that is configured to receive sensor information data, and
- a feedback-exchange interface (328) that is configured to send and receive feedback-exchange signals (322); wherein
- the controller unit (306) is configured
- in the master operation mode (M), to receive an incoming feedback-exchange signal (322.2) from one or more other converter building blocks and to use the feedback-exchange signal (322.2) for generating the internal switching-control signal (110) and the outgoing switching-element control signal (112.1), and
- in the slave operation mode (S), to provide at the feedback exchange interface (328) an outgoing feedback-exchange signal (322.1) indicative of at least a part of the sensor information data.

4. The converter building block (300) according to any of the preceding claims, wherein
- the converter building block (300) comprises a synchronization interface (332) that is configured to receive an incoming synchronization signal (333) indicative of one or more timing requirements; and wherein
- the controller unit (306) is configured, in the master operation mode (M), to generate the internal switching-element control signal (110) and the outgoing switching-element control signal (112.1) in accordance with the timing requirements.

5. The converter building block (300) according to any of the preceding claims, wherein the controller unit (306) is configured, in the slave operation mode, to generate the internal switching-element control signal (110) by either using the incoming switching-element control signal (112.2) as the internal switching-element control signal (110) or by using the incoming switching-element control signal (112.2) time-shifted by a shifting time amount as the internal switching-element control signal (110).

6. The converter building block (300) according to any of the preceding claims, wherein
- the converter building block comprises a health-status interface (334) that is configured to externally provide an outgoing health-status-information signal (335) indicative of a health status of the converter building block (300); and wherein
- the controller unit (306) is configured, in the master operation mode (M) or in the slave operation mode (S), to determine the health status and to generate and provide the outgoing health-status-information signal (335) in accordance with the health status.

7. The converter building block (400) according to at least claim 2, wherein
- the controller-configuration interface (404) is a bidirectional communication interface that is configured to externally provide controller-configuration information (405.1, 405.2); and
- the controller unit (406) has a central-control-unit operation mode (C) and is configured, in the central-control-unit operation mode (C), to generate the controller-configuration information (405.1, 405.2) and to provide the controller-configuration information (405.1, 405.2) through the controller-configuration interface (406) to one or more other converter building blocks.

8. The converter building block (500) according to claim 4 and claim 7, wherein
- the synchronization interface (532) is a bidirectional synchronization interface that is configured to externally provide an outgoing synchronization signal (533.1) indicative of one or more timing requirements; and wherein
- the controller unit is configured, in the central-control mode, to generate and provide through the bidirectional synchronization interface the outgoing synchronization signal (533.1) to one or more other converter building blocks.

9. The converter building block (500) according to claim 6 and at least one of the claims 7 or 8, wherein
- the health-status interface (534) is a bidirectional health-status interface that is configured to receive the incoming health-status-information signal (535.2) of at least one other converter building block; and wherein
- the controller unit (506) is configured, in the central-control-unit operation mode (C), to generate the controller-configuration information (405.1, 405.2) taking into account the health status of the at least one other converter building block.

10. The converter building block (300) according to at least claim 2, wherein the controller-configuration interface (304, 404) is configured to send or receive information via a controller area network bus.

11. The converter building block (300) according to any of the preceding claims, wherein the switching-element control interface (108) is configured to send or receive information via optical signals.

12. The converter building block (300) according to at least claim 3, wherein the feedback-exchange interface (328) is configured to send or receive information via analog signals.

13. A modular isolated active bridge DC/DC converter circuit (620, 720, 820), in particular multi-active-bridge DC/DC converter circuit (620, 720, 820), comprising:
- an inductive element (820.1) including a transformer circuit comprises one or more primary-side transformer terminals and one or more secondary-side transformer terminals,
- two or more converter building blocks (B1, B1' Bn, Bn') according to claims 1 to 12; wherein
- the inductance-side terminal of each of the converter building blocks (B1, B1', ..., Bn, Bn') is electrically connected to either one of the primary-side transformer terminals or one of the secondary-side transformer terminals, and wherein
- at least one of the converter building blocks (B1, ..., Bn) is connected to one of the primary-side transformer terminals and at least one of the converter building blocks (B1', ..., Bn') is connected to the secondary-side transformer terminals.

14. A DC/DC converter arrangement (600, 700, 800), preferably for connecting to a DC source and/or a DC bus, in particular an energy storage unit like e.g. a battery and/or a load, the arrangement comprising:
- a primary DC bus (611) and a secondary DC bus (612);
- a modular isolated active bridge DC/DC converter circuit (620, 720, 820), in particular multi-active-bridge DC/DC converter circuit (620, 720, 820), according to claim 13; and wherein
- the DC-bus-side terminals of those converter building blocks (B1, ..., Bn) electrically connected to the primary-side transformer terminals are electrically connected to the primary DC bus (611) and the DC-bus-side terminals of those converter building blocks (B1', ..., Bn') electrically connected to the secondary-side transformer terminals are electrically connected to the secondary DC bus (612).

15. The DC/DC converter arrangement (600, 700, 800) according to claim 14, comprising:
- an energy storage unit (613), in particular a battery, electrically connected to the primary DC bus (611), and
- a load or a battery (616) electrically connected to the secondary DC bus (612).
